# EUROPÄISCHE PATENTANMELDUNG

(11) **EP 0 785 372 A1**
(43) Veröffentlichungstag der Anmeldung: **23.07.1997**
(21) Anmeldenummer: 97100656.4
(22) Anmeldetag: 17.01.1997
(51) Int. Cl.: F16D 65/097

(54) **Belaghaltefederanordnung für eine Teilbelag-Scheibenbremse, insbesondere für Kraftfahrzeuge**

(30) Priorität: 17.01.1996 DE 19601435
(71) Anmelder: ITT MANUFACTURING ENTERPRISES, INC., Wilmington, Delaware 19801 (US)
(72) Erfinder: Sundheim, Ralf, 60316 Frankfurt (DE); Thiel, Rudolf, 60488 Frankfurt (DE)
(74) Vertreter: Grau, Ulf

(57) **Zusammenfassung**

Die Erfindung betrifft eine Belaghaltefedeanordnung für eine Teilbelag-Scheibenbremse, insbesondere für Kraftfahrzeuge, wobei die Scheibenbremse eine hydraulische Betätigungseinheit mit einem in einem Bremszylinder (2) axial verschiebbar angeordneten Bremskolben (3) aufweist und wobei eine Belaghaltefeder (5) mittels eines Basisteils (12) mit dem Bremsbelag (4) und mittels zumindest eines federnden Abschnittes (14) mit dem Bremskolben (3) verbunden ist. Um bei Anordnungen, bei denen im Bremskolben (3) wenig oder kein Bauraum zur Verfügung steht, eine Befestigung der Belaghaltefeder (5) zu ermöglichen, sind am Basisteil (12) der Belaghaltefeder zumindest zwei federnde Abschnitte (14) vorgesehen, die mit der Außenseite des Bremskolbens (3) lösbar verbunden sind.

## Beschreibung

Die Erfindung betrifft eine Belaghaltefederanordnung für eine Teilbelag-Scheibenbremse, insbesondere für Kraftfahrzeuge, wobei die Scheibenbremse eine hydraulische Betätigungseinheit mit einem in einem Zylinder axial verschiebbar angeordneten Bremskolben aufweist und wobei ein Bremsbelag mit einer Bremsbelaghaltefeder vorgesehen ist, welche mittels eines Basisteils mit dem Bremsbelag und mittels zumindest eines federnden Abschnittes mit dem Bremskolben verbunden ist.

Eine derartige Belaghaltefederanordnung ist aus der DE 43 18 744 C1 bekannt. Bei dieser Belaghaltefederanordnung ist an der Rückenplatte des Bremsbelages eine Blattfeder angebracht, an deren Basisteil drei federnde Arme vorgesehen sind, die in das Innere des Bremskolbens eingreifen und zur axialen Halterung am Bremskolben in eine im Inneren des Bremskolbens vorgesehene Nut einrasten. Die bekannte Belaghaltefederung benötigt einen relativ großen axialen Bauraum im Inneren des Kolbens, der nicht immer gegeben ist.

Der Erfindung liegt daher die Aufgabe zugrunde, eine Belaghaltefederung der eingangs genannten Art zu schaffen, die ohne Bauraum im Inneren des Bremskolbens auskommt.

Diese Aufgabe wird erfindungsgemäß dadurch gelöst, daß die Belaghaltefeder zumindest zwei federnde Abschnitte aufweist, die mit der Außenseite des Bremskolbens lösbar verbunden sind.

Mit der erfindungsgemäßen Lösung wird eine Belaghaltefederanordnung geschaffen, bei der ein Bauraum zur Befestigung der Belaghaltefeder im Inneren des Kolbens nicht erforderlich ist und die insgesamt mit einem sehr kurzen axialen Bauraum auskommt. Die Belaghaltefederung ist daher insbesondere für Scheibenbremsen geeignet, bei denen im Inneren des Bremskolbens andere Bauelemente wie beispielsweise eine Nachstellvorrichtung vorgesehen ist, d.h. z.B. bei sogenannten kombinierten Scheibenbremsen, bei denen eine hydraulische und eine mechanische Betätigung vorgesehen ist. Auch bei anderen Scheibenbremsen kann der Bauraum im Inneren des Kolbens beschränkt sein, oder aber der Kolben ist mit seinem offenen Ende dem Zylinderinneren zugewandt, so daß eine Verbindung von der Bremsbelagseite her nicht möglich ist.

Bei einer vorteilhaften Ausführungsform der Erfindung ist vorgesehen, daß die federnden Abschnitte eine axiale Erstreckung aufweisen, die in eine oder mehrere an der dem Bremsbelag zugewandten Stirnseite des Bremskolbens vorgesehene Öffnungen eingreifen. Diese Lösung ist besonders vorteilhaft bei solchen Scheibenbremsen, bei denen am Außenumfang des Bremskolbens praktisch überhaupt kein Platz zur Befestigung der Belaghaltefeder zur Verfügung steht.

Für solche Scheibenbremsen, bei denen am Umfang des Bremskolbens ausreichend Platz zur Verfügung steht, sieht eine zweckmäßige Ausführungsform der Erfindung vor, daß die federnden Abschnitte eine axiale Erstreckung aufweisen, die in eine oder mehrere am Außenumfang des Bremskolbens vorgesehene Öffnungen eingreifen.

In sehr zweckmäßiger Weise kann die Belaghaltefeder topfförmig ausgebildet sein, wobei die federnden Abschnitte an einem sich axial erstreckenden Abschnitt des Federtopfes ausgebildet sind. Der Federtopf kann durch Tiefziehen hergestellt sein.

Die Verbindung der federnden Abschnitte der Belaghaltefeder kann mittels Pressung oder durch Hintergreifen bzw. Einrasten hinter am Kolben vorgesehene Vorsprünge erfolgen.

Gemäß vorteilhaften Ausführungsformen sind die federnden Abschnitte als Zunge oder aber als Vorsprünge bzw. Vertiefungen am Federtopf, wie z.B. Sicken oder dergleichen ausgebildet.

Als sehr vorteilhaft hat es sich herausgestellt, wenn die federnden Abschnitte der Belaghaltefeder gleichzeitig zur Begrenzung bzw. Halterung einer am Kolben befestigten Schutzkappe dienen, wie dies eine bevorzugte Ausführungsform der Erfindung vorsieht.

Weitere vorteilhafte Ausführungsformen der Erfindung sehen vor, daß die Belaghaltefeder außerhalb des Kolbenumfanges mit dem Bremsbelag verbunden ist und daß die Belaghaltefeder in ein am Bremsbelag vorgesehenes Distanzblech integriert ist.

Weitere Vorteilhafte und Merkmale der Erfindung ergeben ich aus der Beschreibung der nachfolgenden Ausführungsbeispiele anhand der Zeichnungen.

Es zeigen:
- Fig. 1: eine erste Ausführungsform einer Belaghaltefederanordnung für eine Teilbelag-Scheibenbremse im Längsschnitt, teilweise weggebrochen,
- Fig. 2: eine zweite Ausführungsform einer Belaghaltefederanordnung im Längsschnitt, teilweise gebrochen,
- Fig. 3: eine dritte Ausführungsform einer Belaghaltefederanordnung im Längsschnitt, teilweise gebrochen,
- Fig. 4: eine vierte Ausführungsform einer Belaghaltefederanordnung im Längsschnitt, teilweise gebrochen,
- Fig. 5: eine fünfte Ausführungsform einer Belaghaltefederanordnung im Längsschnitt, teilweise gebrochen,
- Fig. 6: eine sechste Ausführungsform einer Belaghaltefederanordnung im Längschnitt, teilweise gebrochen,
- Fig. 7: eine siebste Ausführungsform einer Belaghaltefederanordnung im Längsschnitt, teilweise gebrochen,
- Fig. 8: eine achte Ausführungsform einer Belaghaltefederanordnung im Längsschnitt, teilweise gebrochen, und
- Fig. 9: eine schematische Ansicht einer neunten Ausführungsform einer Belaghaltefederanordnung mit einer Federbefestigung außerhalb des Kolbens.

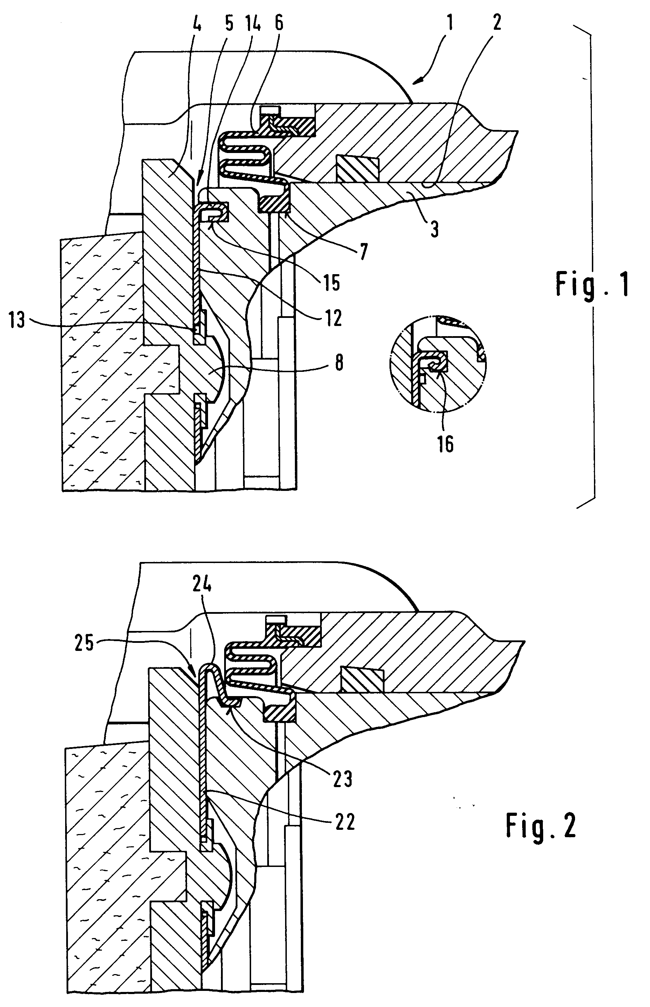

Fig. 1 zeigt eine Betätigungseinrichtung einer Teilbelag-Scheibenbremse, wie sie insbesondere für Kraftfahrzeuge eingesetzt wird, und die einen in einem Bremsgehäuse 1 vorgesehenen Bremszylinder 2 aufweist, in dem ein Bremskolben 3 axial verschiebbar angeordnet ist. Am Bremskolben 3 ist ein Bremsbelag 4 mittels einer Belaghaltefeder 5 angebracht. An der Stirnseite der den Bremszylinder 2 begrenzenden Wandung ist ein Ende einer Dichtmanschette 6 befestigt, deren anderes Ende in einer am Außenumfang des Bremskolbens vorgesehenen Nut 7 sitzt. Die Belaghaltefeder 5 ist mittels eines in die Rückenplatte des Bremsbelages integrierten Nietes 8 am Bremsbelag befestigt, mit axialem Toleranzausgleich zwischen dem Bremskolben 3, dem Bremsgehäuse 1 und dem (nicht dargestellten) Bremsenhalter. Die Belaghaltefeder 5 bildet ein Basisteil 12, welches an der Rückenplatte des Bremsbelages 4 anliegt und eine Öffnung 13 aufweist, durch das sich der Niet 8 hindurch erstreckt. Der Niet 8 kann als Taumelniet ausgeführt sein und ist hier in der Kolbenmitte angeordnet; er kann jedoch auch außerhalb der Kolbenmitte angeordnet sein. Vom Außenrand des Basisteiles 12 aus erstrecken sich federnde Abschnitte 14, in axialer Richtung, welche in eine Nut 15 eingreifen, die an der Stirnseite des Bremskolbens 3 ausgebildet ist. Anstelle der umlaufenden Nut 15 können auch Einzelausnehmungen für die federnden Abschnitte in der Stirnseite des Kolbens vorgesehen sein. Das Ende des federnden Abschnittes 14 ist umgebogen ausgeführt. Die Befestigung am Bremskolben kann durch Pressung an der äußeren Wandung der Nut 15 oder mittels des umgebogenen Teils an der inneren Wandung der Nut 15 erfolgen. Bei der in Fig. 1 in einem kleinen Kreis ausgebildeten Variante ist in der Nut 15 eine Vertiefung 16 vorgesehen, hinter der das umgebogene Ende des federnden Abschnittes 14 einrastet.

Bei der in Fig. 2 dargestellten Ausführungsform ist eine Belaghaltefeder 25 vorgesehen, deren Basisteil 22 über den Außenrand des Bremskolbens radial vorspringt, von deren Umfang aus sich federnde Abschnitte 24 zunächst in axialer Richtung und dann geneigt axial/radial erstrecken, um mit einem abgebogenen Ende in einer am Außenumfang des Bremskolbens vorgesehenen Nut 23 bzw. entsprechende der Anzahl der federnden Abschnitte vorgesehene Einzelausnehmungen einzurasten.

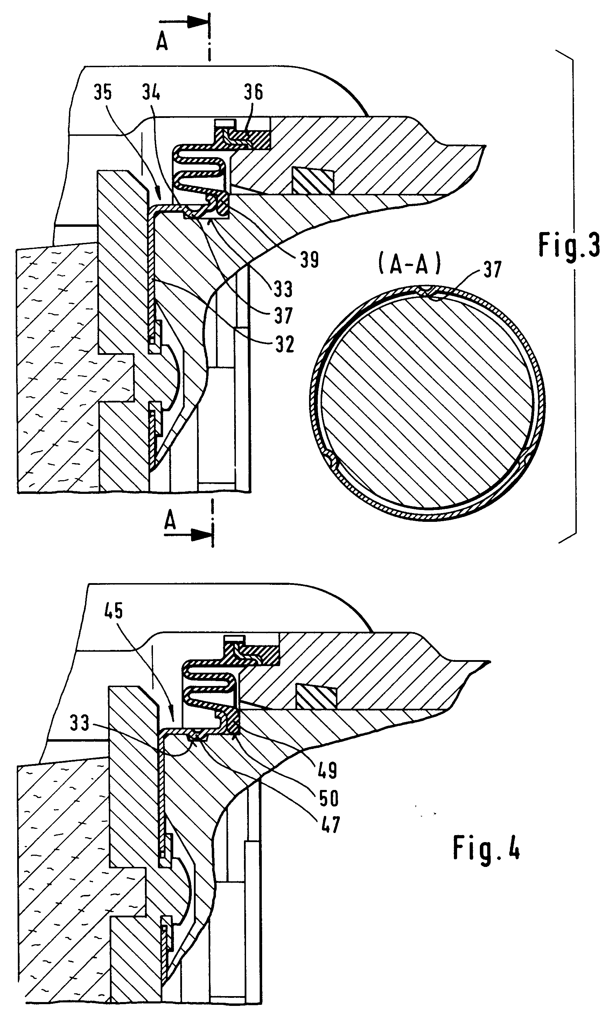

Die in Fig. 3 dargestellte Ausführungsform weist eine Belaghaltefeder 35 auf, von deren Basisteil 32 sich ein umlaufender federnder Abschnitt 34 in axialer Richtung erstreckt. Der umlaufende federnde Abschnitt 34 weist drei Vorsprünge bzw. Sicken auf, deren eine mit 37 bezeichnet ist und die sich radial in die Nut 33 erstrecken, um die Belaghaltefeder 35 am Bremskolben zu halten. Das Ende des federnden Abschnittes 34 ist zweifach umgebogen und bildet dadurch eine Begrenzung für den Endabschnitt 39 der Dichtmanschette 36, der gleichfalls in der Nut 33 angeordnet ist. Dadurch läßt sich eine einfache Montage der Schutzkappe erreichen sowie ein Verdrehen der Schutzkappe vermeiden, wenn der Bremskolben bei einem Belagwechsel zurückgesetzt wird. Die Schutzkappe kann einfach und kostengünstig ausgebildet sein.

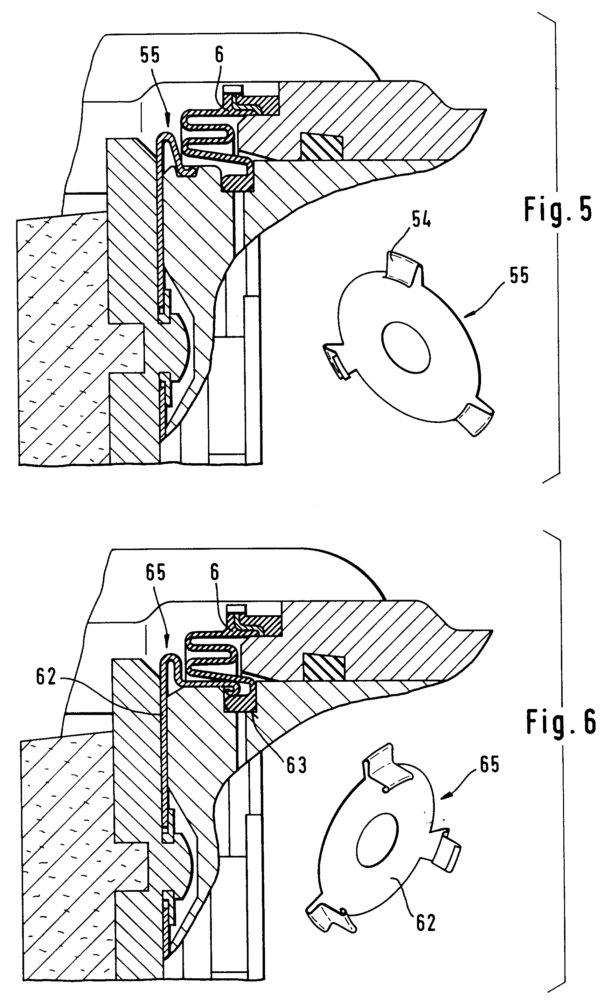

Bei der in Fig. 4 dargestellten Ausführungsform weist die Belaghaltefeder 45, die ähnlich ausgebildet ist wie die topfförmige Belaghaltefeder 35 der Fig. 4 Vorsprünge 47 auf, die in eine Nut 33 einrastet. Das umgebogene Ende des federnden Abschnittes bildet eine Begrenzung für den Endabschnitt 49 der Dichtmanschette, die hier im Unterschied zu der Ausführungsform in Fig. 3 nicht in einer Nut, sondern auf einer am Bremskolben ausgebildeten Schulter 50 sitzt.

Das in Fig. 5 dargestellte Ausführungsbeispiel weist eine Belaghaltefeder 55 auf, die der in Fig. 2 dargestellten topfförmigen Belaghaltefeder 25 ähnelt, wobei hier die federnden Abschnitte von drei Zungen 54 gebildet sind.

Bei dem in Fig. 6 dargestellten Ausführungsbeispiel werden die federnden Abschnitte 64 der Belaghaltefeder 65 gleichfalls von Zungen gebildet. Die federnden Abschnitte erstrecken sich vom Rand des Basisteils 62 aus zunächst ein kurzes Stück in axialer Richtung und sind dann umgebogen, um einen sich radial erstreckenden Abschnitt zu bilden, der in einen sich wiederum axial erstreckenden Abschnitt übergeht, dessen Ende umgebogen ist und in die Nut 63 eingreift, in der auch der Endabschnitt der Dichtmanschette 6 sitzt.

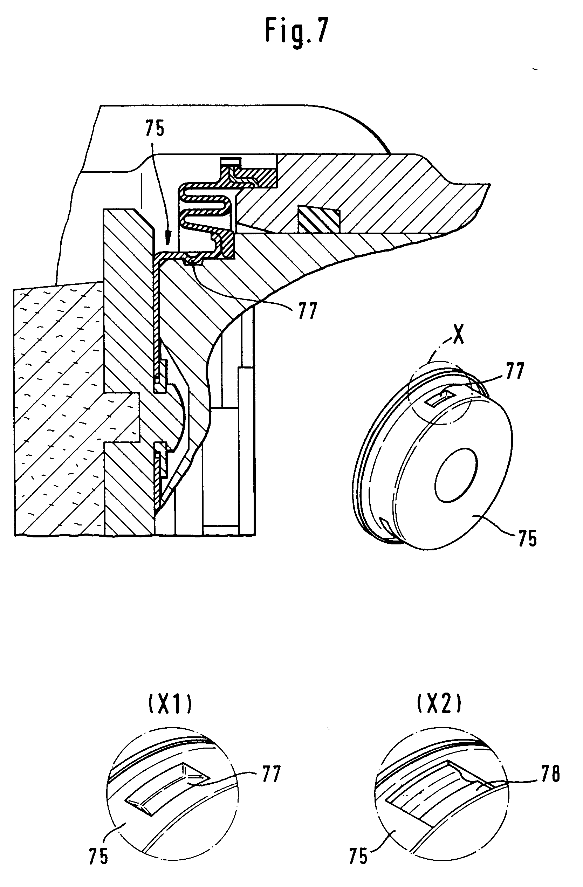

Die in Fig. 7 dargestellte Ausführungsform weist eine Belaghaltefeder 75 auf, die der Belaghaltefeder 45 in Fig. 4 gleicht, die jedoch topfförmig ausgebildet ist, wobei an dem sich in axialer Richtung erstreckenden Rand des Federtopfes Vorsprünge 77 (X1) oder Einprägungen 78 (X2) vorgesehen sind.

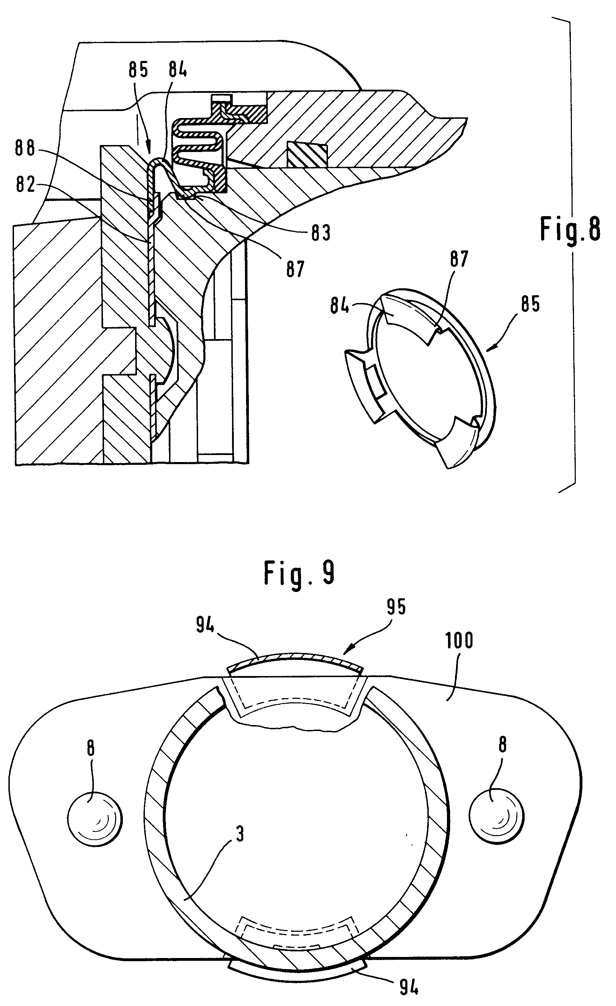

Die bei der Ausführungsform der Fig. 8 vorgesehene Belaghaltefeder 85 weist drei als federnde Abschnitte 84 ausgebildete Zungen auf. Die federnden Abschnitte 84 sind an einem separaten ringförmigen Teil ausgebildet, und bilden jeweils einen Vorsprung 87, der in eine Nut 83 einrastet und sind am Ende umgebogen, um eine Begrenzung bzw. Halterung für den Endabschnitt der Dichtmanschette zu bilden. Zur Befestigung des die federnden Abschnitte tragenden Elementes greift ein sich radial erstreckender Abschnitt 88 hinter den vorkragenden Rand des separaten Basisteils 82. Durch diese Halterung kann auf einfache Weise ein Toleranzausgleich erfolgen, der bei den anderen Ausführungsformen (Fig. 1 bis 7) durch die im Basisteil vorgesehene Öffnung 13 erfolgt, die etwas größer ist, als der Außendurchmesser des Nietes 8.

Fig. 9 zeigt schematisch eine Ausführungsform, bei der die Belaghaltefeder 95 in ein Distanzblech 100 integriert ist und zwei federnde Abschnitte 94 aufweist, die außen am Kolben angreifen. Die Befestigung der Belaghaltefeder 95 an der Rückenplatte des Bremsbelages erfolgt durch zwei Niete 8.

### Bezugszeichenliste

- 1: Bremsgehäuse
- 2: Bremszylinder
- 3: Bremskolben
- 4: Bremsbelag
- 5: Belaghaltefeder
- 6: Dichtmanschette
- 7: Nut
- 8: Niet
- 12: Basisteil
- 13: Öffnung
- 14: federnder Abschnitt
- 15: Nut
- 16: Vertiefung
- 22: Basisteil
- 23: Nut
- 25: Belaghaltefeder
- 32: Basisteil
- 33: Nut
- 34: federnder Abschnitt
- 35: Belaghaltefeder
- 37: Vorsprung
- 39: Endabschnitt
- 45: Belaghaltefeder
- 47: Vorsprung
- 49: Endabschnitt
- 54: federnder Abschnitt
- 55: Belaghaltefeder
- 62: Basisteil
- 63: Nut
- 64: federnder Abschnitt
- 65: Belaghaltefeder
- 75: Belaghaltefeder
- 77: Vorsprung
- 78: Einprägung
- 83: Nut
- 84: federnder Abschnitt
- 85: Belaghaltefeder
- 88: Abschnitt
- 94: federnder Abschnitt
- 95: Belaghaltefeder
- 100: Distanzblech

## Patentansprüche

1. Belaghaltefederung für eine Teilbelag-Scheibenbremse, insbesondere für Kraftfahrzeuge, wobei die Scheibenbremse eine hydraulische Betätigungseinheit mit einem in einem Zylinder axial verschiebbar angeordneten Bremskolben aufweist und wobei eine Bremsbelaghaltefeder mittels eines Basisteils mit dem Bremsbelag und mittels zumindest eines federnden Abschnittes mit dem Bremskolben verbunden ist. Um bei Anordnungen, bei denen im Bremskolben wenig oder kein Bauraum zur Verfügung steht, eine Befestigung der Belaghaltefeder (5) zu ermöglichen, sind am Basisteil (12) der Belaghaltefeder zumindest zwei federnde Abschnitte (14) vorgesehen, die mit der Außenseite des Bremskolbens (3) lösbar verbunden sind, dadurch **gekennzeichnet**, daß am Basisteil (12,22,32,62) zumindest zwei federnde Abschnitte (14,34,54,64,84,94) vorgesehen sind, die mit der Außenseite des Bremskolbens (3) lösbar verbunden sind.

2. Belaghaltefederanordnung nach Anspruch 1, dadurch **gekennzeichnet**, daß die federnden Abschnitte (14) eine axiale Erstreckung aufweisen, die in eine oder mehrere an der dem Bremsbelag (4) zugewandten Stirnseite des Bremskolbens (3) vorgesehene Öffnungen bzw. Ausnehmungen (23) eingreifen. (Fig. 1)

3. Belaghaltefederanordnung nach Anspruch 1, dadurch **gekennzeichnet**, daß der bzw. die federnden Abschnitte eine axiale Erstreckung aufweisen, die in eine oder mehrere am Außenumfang des Bremskolbens (3) vorgesehene Öffnungen bzw. Ausnehmungen (23,33,63,83) eingreifen. (Fig. 2 - 8)

4. Belaghaltefederanordnung nach einem der vorhergehenden Ansprüche, dadurch **gekennzeichnet**, daß die Belaghaltefeder (5,25,35,75) topfförmig ausgebildet ist, wobei die federnden Abschnitte (14,34) an einem sich axial erstreckenden Abschnitt des (Feder)Topfes ausgebildet sind. (Fig. 1 - 4)

5. Belaghaltefederanordnung nach einem der Ansprüche 1 bis 4, dadurch **gekennzeichnet**, daß die federnden Abschnitte mittels Pressung mit dem Bremskolben (3) verbunden sind.

6. Belaghaltefederanordnung nach einem der Ansprüche 1 bis 4, dadurch **gekennzeichnet**, daß die federnden Abschnitte zur Verbindung mit dem Kolben hinter am Kolben vorgesehene Vorsprünge greifen.

7. Belaghaltefederanordnung nach einem der Ansprüche 1 bis 6, dadurch **gekennzeichnet**, daß die federnden Abschnitte (54,64,84) als Zunge ausgebildet sind (Fig. 5,6,8,9).

8. Belaghaltefederanordnung nach einem der Ansprüche 1 bis 6, dadurch **gekennzeichnet**, daß die federnden Abschnitte als Vorsprünge bzw. Vertiefungen (Sicken) am (Feder)Topf ausgebildet sind (Fig. 1,2,3,4,7).

9. Belaghaltefederanordnung nach einem der vorhergehenden Ansprüche, dadurch **gekennzeichnet**, daß die federnden Abschnitte (in axialer und/oder in radialer Richtung) eine Begrenzung bzw. Halterung für eine am Bremskolben (3) befestigte Dichtmanschette (6) bilden (Fig. 3,4,6,7,8).

10. Belaghaltefederanordnung nach einem der vorhergehenden Ansprüche, dadurch **gekennzeichnet**, daß die Belaghaltefeder außerhalb des Umfanges des Bremskolbens (3) mit dem Bremsbelag verbunden ist (Fig. 9).

11. Belaghaltefederanordnung nach einem der vorhergehenden Ansprüche, dadurch **gekennzeichnet**, daß die Belaghaltefeder (95) in ein am Bremsbelag vorgesehenes Distanzblech (100) integriert ist (Fig. 9).

12. Belaghaltefeder, insbesondere zur Verwendung bei einer Belaghalteanordnung nach einem der vorhergehenden Ansprüche, wobei die Belaghaltefeder mittels eines Basisteils an einem Bremsbelag befestigbar ist und zumindest einen federnden Abschnitt zur Verbindung mit dem Bremskolben aufweist, dadurch **gekennzeichnet**, daß am Basisteil zumindest zwei federnde Abschnitte (14,34,54,64,84,94) vorgesehen sind, die mit der Außenseite des Bremskolbens (3) lösbar verbbindbar sind. (Fig. 1 - 9)
